# EUROPEAN PATENT APPLICATION

(11) **EP 4 450 529 A1**
(43) Date of publication of application: **23.10.2024**
(21) Application number: 22907241.8
(22) Date of filing: 02.12.2022
(51) Int. Cl.: C08F 299/02, C08G 65/331, C08G 65/333

(54) **FLUOROPOLYETHER GROUP-CONTAINING ACRYLIC COMPOUND**

(30) Priority: 14.12.2021 JP 2021202500
(71) Applicant: SHIN-ETSU CHEMICAL CO., LTD., Tokyo 1000005 (JP)
(72) Inventor: MORI Seiya, Annaka-shi, Gunma 379-0224 (JP); SAKANO Yasunori, Annaka-shi, Gunma 379-0224 (JP)
(74) Representative: Ter Meer Steinmeister & Partner
(86) International application number: PCT/JP2022/044496
(87) International publication number: WO 2023/112713

(57) **Abstract**

According to the present invention, a fluoropolyether group-containing acrylic compound represented by formula (1) has a low refractive index and is capable of forming a transparent composition by being compatibilized with a commonly used photopolymerization initiator.

(1): V¹-Rf²-C(=O)-NR¹ₐ[Y²(X²)_{b'}]₂₋ₐ

(In the formula, Rf² represents a divalent perfluoropolyether group that is composed of a perfluoroalkylene group having 1 to 6 carbon atoms and an oxygen atom, while having a number average molecular weight of 500 to 40,000; Y² represents a (b'+1)-valent organic group having 1 to 20 carbon atoms; X² represents a monovalent organic group that contains an acryl group or an α-substituted acryl group, and at least one acryl group or α-substituted acryl group is contained in each molecule on average; R¹ represents a hydrogen atom or a monovalent hydrocarbon group having 1 to 8 carbon atoms; V² represents a hydrogen atom, a fluorine atom or a monovalent group represented by -C(=O)-NR¹_{a[}Y²(X²)_{b'}]₂₋ₐ; a represents 0 or 1; and b' represents an integer of 1 to 10.)

## Description

### TECHNICAL FIELD

This invention relates to a fluoropolyether-containing acrylic compound which has a low refractive index and is compatible with a photopolymerization initiator to form a transparent composition.

### BACKGROUND ART

In the prior art, polymers comprising polymerizable monomers having a perfluoroalkyl group in side chain, for example, acrylic acid fluorinated alkyl esters and methacrylic acid fluorinated alkyl esters are well known as fluorine compounds which are curable upon exposure to light such as UV. Many attempts are made to utilize these fluorinated acrylic compounds in optical materials for taking advantage of effective cure upon UV exposure, high transparency and a low refractive index. For example, Patent Document 1 (JP-A H06-136062) discloses the utilization of fluorinated acrylic compounds in antireflection film application. Patent Document 2 (JP-A H05-032749) discloses the utilization of fluorinated acrylic compounds as optical fiber coating material.

On the other hand, as the fluorine content of fluorinated acrylic compounds is increased for the purpose of further lowering a refractive index or other purposes, the fluorinated acrylic compounds become less soluble in non-fluorinated organic compounds and insoluble in conventional photopolymerization initiators. This raises the problem that transparent cured products are not obtained or cured products become more crystalline, losing transparency. It is then difficult to obtain transparent cured products having a refractive index below a certain value.

Under the circumstances, the inventors continued the development of fluorinated acrylic compounds. The inventors proposed in Patent Document 3 (JP-A 2006-233172), for example, a fluorinated curable composition which is UV-curable into a transparent cured product having a low refractive index.

Although these compositions are able to form transparent cured products having a low refractive index, they suffer the problem that a photopolymerization initiator modified with a perfluoropolyether group must be separately synthesized.

### PRIOR ART DOCUMENTS

### PATENT DOCUMENTS

| | |
|---|---|
| Patent Document 1: | JP-A H06-136062 |
| Patent Document 2: | JP-A H05-032749 |
| Patent Document 3: | JP-A 2006-233172 |

### SUMMARY OF INVENTION

### TECHNICAL PROBLEM

An object of the invention, which has been made under the above-mentioned circumstances, is to provide a fluoropolyether-containing acrylic compound which has a low refractive index and is compatible with a photopolymerization initiator to form a transparent composition.

### SOLUTION TO PROBLEM

Making extensive investigations to attain the above object, the inventors have found that a fluoropolyether-containing acrylic compound having the general formula (1), shown below, has a low refractive index and is compatible with a photopolymerization initiator to form a transparent composition. The invention is predicated on this finding.

V²-Rf²-C(=O)-NR¹ₐ[Y²(X²)_{b'}]₂₋ₐ (1)

Herein Rf² is a divalent perfluoropolyether group composed of C₁-C₆ perfluoroalkylene groups and oxygen and having a number average molecular weight of 500 to 40,000, Y² is independently a (b'+1)-valent C₁-C₂₀ organic group, X² is independently a monovalent organic group containing an acryloyl or α-substituted acryloyl group, at least one acryloyl or α-substituted acryloyl group being contained per molecule on the average, R¹ is hydrogen or a C₁-C₈ monovalent hydrocarbon group, V² is hydrogen, fluorine or a monovalent group of the formula: -C(=O)-NR¹ₐ[Y²(X²)_{b'}]₂₋ₐ, a is 0 or 1, and b' is an integer of 1 to 10.

Accordingly, the invention provides a fluoropolyether-containing acrylic compound as defined below.
[1] A fluoropolyether-containing acrylic compound having the general formula (1):

   V²-Rf²-C(=O)-NR¹ₐ[Y²(X²)_{b'}]₂₋ₐ (1)

   wherein Rf² is a divalent perfluoropolyether group composed of C₁-C₆ perfluoroalkylene groups and oxygen and having a number average molecular weight of 500 to 40,000, Y² is independently a (b'+1)-valent C₁-C₂₀ organic group, X² is independently a monovalent organic group containing an acryloyl or α-substituted acryloyl group, at least one acryloyl or α-substituted acryloyl group being contained per molecule on the average, R¹ is hydrogen or a C₁-C₈ monovalent hydrocarbon group, V² is hydrogen, fluorine or a monovalent group of the formula: -C(=O)-NR¹ₐ[Y²(X²)_{b'}]₂₋ₐ, a is 0 or 1, and b' is an integer of 1 to 10.
[2] The fluoropolyether-containing acrylic compound of [1] wherein in the formula (1), Rf² is a divalent perfluoropolyether group having the following formula: 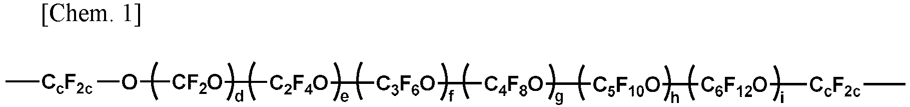 wherein c is independently for each unit an integer of 2 to 6, d, e, f, g, h and i are each an integer of 0 to 200, d+e+f+g+h+i = 4 to 200, each unit may be straight or branched, individual units in parentheses with subscripts d, e, f, g, h and i may be randomly arranged.
[3] The fluoropolyether-containing acrylic compound of [1] or [2] wherein in the formula (1), Rf² is selected from divalent perfluoropolyether groups having the following structural formulae:

   -CF₂CF₂O-(CF₂CF₂CF₂O)_{q}-CF₂CF₂-

   wherein q is an integer of 4 to 200, 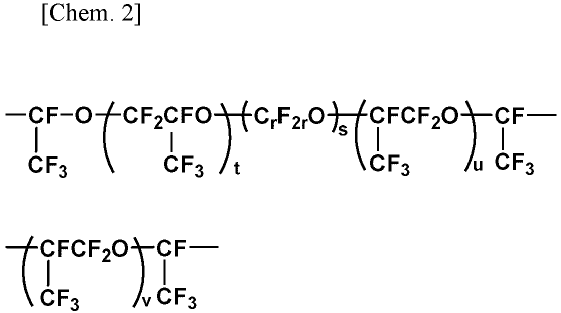
   wherein r is an integer of 1 to 6, CᵣF₂ᵣO may be straight or branched, s is an integer of 0 to 6, t and u each are an integer of 1 to 200, t+u is an integer of 2 to 200, s+t+u is an integer of 4 to 200, and v is an integer of 5 to 200.
[4] The fluoropolyether-containing acrylic compound of any one of [1] to [3] wherein in the formula (1), R¹ is hydrogen and a is 1.
[5] The fluoropolyether-containing acrylic compound of any one of [1] to [4] wherein in the formula (1), Y² is selected from groups having the following formulae: 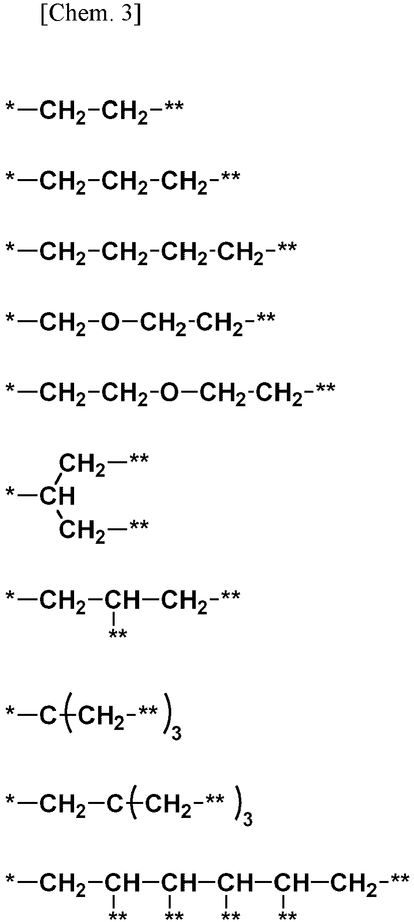 wherein * designates a point of attachment to N and ** designates a point of attachment to X².
[6] The fluoropolyether-containing acrylic compound of any one of [1] to [5] wherein in the formula (1), X² has the following structural formula: 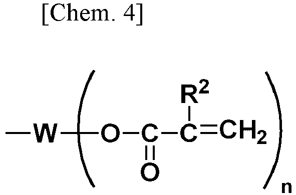 wherein R² is independently hydrogen, fluorine, methyl or trifluoromethyl, W is a single bond, or a di- or trivalent hydrocarbon group which may contain at least one bond selected from ether bond, ester bond and urethane bond, and n is 1 or 2.
[7] The fluoropolyether-containing acrylic compound of any one of [1] to [6] wherein in the formula (1), X² is selected from groups having the following formulae. 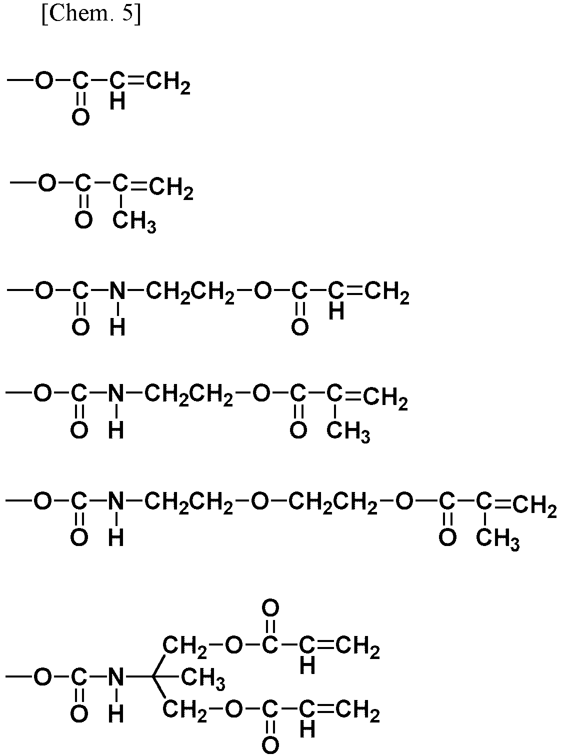
[8] The fluoropolyether-containing acrylic compound of any one of [1] to [7] wherein the fluoropolyether-containing acrylic compound having the formula (1) has any one of the following formulae: 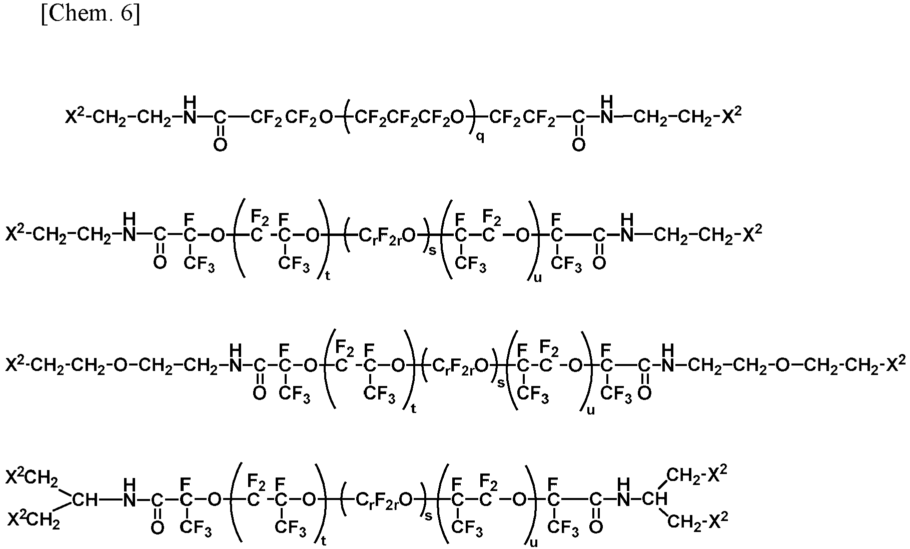 wherein X² is as defined above, q is an integer of 4 to 200, r is an integer of 1 to 6, CᵣF₂ᵣO may be straight or branched, s is an integer of 0 to 6, t and u each are an integer of 1 to 200, t+u is an integer of 2 to 200, and s+t+u is an integer of 4 to 200.
[9] The fluoropolyether-containing acrylic compound of any one of [1] to [8], having a refractive index of up to 1.390 at temperature 25°C and wavelength 589 nm.

### ADVANTAGEOUS EFFECTS OF INVENTION

The fluoropolyether-containing acrylic compound of the invention has a low refractive index and is compatible with a photopolymerization initiator to form a transparent composition. The fluoropolyether-containing acrylic compound is thus useful as one component of a fluorinated, actinic energy ray-curable composition for optical parts or the like.

### DESCRIPTION OF EMBODIMENTS

The invention provides a fluoropolyether-containing acrylic compound having the general formula (1).

V²-Rf²-C(=O)-NR¹ₐ[Y²(X²)_{b'}]₂₋ₐ (1)

Herein Rf² is a divalent perfluoropolyether group composed of C₁-C₆ perfluoroalkylene groups and oxygen and having a number average molecular weight (Mn) of 500 to 40,000, Y² is independently a (b'+1)-valent C₁-C₂₀ organic group, X² is independently a monovalent organic group containing an acryloyl or α-substituted acryloyl group, at least one acryloyl or α-substituted acryloyl group being contained per molecule on the average, R¹ is hydrogen or a C₁-C₈ monovalent hydrocarbon group, V² is hydrogen, fluorine or a monovalent group of the formula: -C(=O)-NR¹ₐ[Y²(X²)_{b'}]₂₋ₐ, a is 0 or 1, and b' is an integer of 1 to 10.

As used herein, the term "acrylic compound" collectively refers to compounds having an acryloyl group and compounds having an α-substituted acryloyl group, and encompasses compounds having two or more acryloyl or α-substituted acryloyl groups introduced at side chains or ends of various polymers by any desired method. As used herein, the term "(meth)acrylate" refers to one or both of acrylate and methacrylate, "(meth)acryloyl group" refers to one or both of acryloyl and methacryloyl groups, and "(meth)acrylic acid" refers to one or both of acrylic acid and methacrylic acid.

Since the fluoropolyether-containing acrylic compound of the invention has a perfluoropolyether group as a group providing a low refractive index, an amide bond as a group for improving compatibility with a photopolymerization initiator, and an acryloyl or α-substituted acryloyl group, it has a low refractive index and is compatible with a photopolymerization initiator to form a transparent composition. The compound may be used as one component of a fluorinated actinic energy-curable composition which can be cured with actinic energy radiation such as ultraviolet (UV) or electron beam (EB).

The fluoropolyether-containing acrylic compound essentially contains an amide structure in its structure. Since the amide structure functions as a hydrogen bond acceptor, the compatibility of the acrylic compound with a photopolymerization initiator is improved by the interaction with hydrogen in the initiator. As a result, the compound is compatible with the photopolymerization initiator to form a transparent composition.

In the formula (1), Rf² is a divalent perfluoropolyether group composed of C₁-C₆ perfluoroalkylene groups and oxygen and having a Mn of 500 to 40,000. Rf² is preferably a divalent perfluoropolyether group composed of perfluorooxyalkylene structures of 1 to 6 carbon atoms, especially 1 to 3 carbon atoms, as shown below, as main repeating units.

-CF₂O-

-CF₂CF₂O-

-CF(CF₃)CF₂O-

-CF₂CF₂CF₂O-

The group may be a homopolymer of any one of these structures, or a random or block polymer composed of plural structures.

Exemplary of the group Rf² having such a structure is the following one. 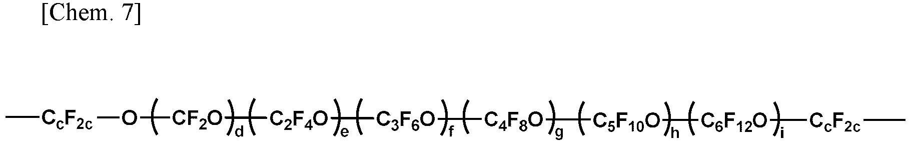 Herein c is independently for each unit an integer of 2 to 6, d, e, f, g, h and i are each an integer of 0 to 200, d+e+f+g+h+i is from 4 to 200, each unit may be straight or branched, and individual units in parentheses with subscripts d, e, f, g, h and i may be randomly arranged.

In the above formula, c is independently for each unit an integer of 2 to 6, preferably 2 to 4. In case of c=1, the amide bond in the compound is susceptible to hydrolysis due to the electron attraction of fluorine and oxygen atoms, allowing decomposition to take place during storage. For this reason, preferably c is independently for each unit an integer of 2 to 6.

The subscripts d, e, f, g, h and i each are an integer of 0 to 200. Preferably, d is an integer of 0 to 100, e is an integer of 5 to 100, f is an integer of 5 to 100, g is an integer of 0 to 100, h is an integer of 0 to 100, and i is an integer of 0 to 100, and d+e+f+g+h+i is from 4 to 200, preferably from 10 to 150, more preferably from 30 to 150.

In the above formula, each unit may be straight or branched, and individual units in parentheses with subscripts d, e, f, g, h and i may be randomly arranged.

The number average molecular weight (Mn) of the structure corresponding to Rf² is in the range of 500 to 40,000, preferably 2,000 to 25,000 while its molecular weight distribution or degree-of-polymerization distribution is not particularly limited. If Mn is less than 500, a lowering of fluorine content leads to a high refractive index. If Mn exceeds 40,000, a lowering of ease of handling due to an increased viscosity and a lowering of compatibility with a polymerization initiator due to an increased fluorine content exceed the negligible level. As used herein, the molecular weight (or degree of polymerization or number of repeating units) may be determined as a number average molecular weight (or number average degree of polymerization) by gel permeation chromatography (GPC) versus polystyrene standards using a fluorochemical solvent as developing solvent, or as a number average molecular weight (or number average degree of polymerization) computed from a characteristic peak intensity ratio of end structure to backbone structure of the fluoropolyether-containing acrylic compound as analyzed by ¹H-NMR and ¹⁹F-NMR spectroscopy.

Exemplary of the group Rf² having such a structure are the following structures.

-CF₂CF₂O-(CF₂CF₂CF₂O)_{q}-CF₂CF₂-

Herein q is an integer of 4 to 200, preferably 10 to 150. 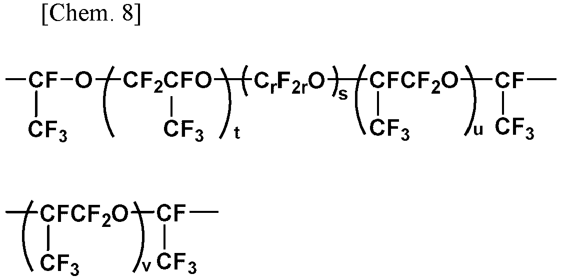 Herein r is an integer of 1 to 6, preferably 2 to 4; CᵣF₂ᵣO may be straight or branched; s is an integer of 0 to 6; t is an integer of 1 to 100, preferably 5 to 80; u is an integer of 1 to 100, preferably 5 to 80; t+u is an integer of 2 to 200, preferably 10 to 150; s+t+u is an integer of 4 to 200, preferably 10 to 150; v is an integer of 5 to 200, preferably 10 to 150.

The following structures are most preferred examples of Rf². Although the end portion of Rf² is, in general, highly reactive and susceptible to hydrolysis due to the electron attraction of fluorine atoms, the group Rf² of the following structure wherein the end portion of Rf² is shielded by C₂F₄ group, more preferably CF(CF₃) group is preferred because it is substantially unsusceptible to hydrolysis and decomposition during long-term storage. 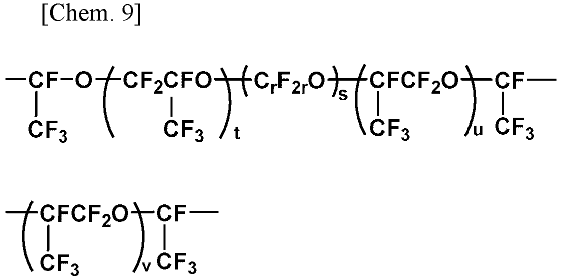 Herein r, s, t, u and v are as defined above.

In the formula (1), R¹ is hydrogen or a C₁-C₈, preferably C₁-C₆ monovalent hydrocarbon group. Examples of the monovalent hydrocarbon group include alkyl groups such as methyl, ethyl, propyl, isopropyl, butyl, isobutyl, tert-butyl, pentyl, neopentyl, hexyl, and octyl; cycloalkyl groups such as cyclohexyl; alkenyl groups such as vinyl, allyl and propenyl; aryl groups such as phenyl, tolyl and xylyl; and aralkyl groups such as benzyl and phenylethyl. R¹ is preferably hydrogen, methyl or ethyl, most preferably hydrogen.

In the formula (1), Y² is independently a (b'+1)-valent C₁-C₂₀, preferably C₁-C₈ organic group, desirably a (b'+1)-valent C₁-C₂₀, preferably C₁-C₈ hydrocarbon group which may contain an ether bond. Preferred structures of Y² are shown below.

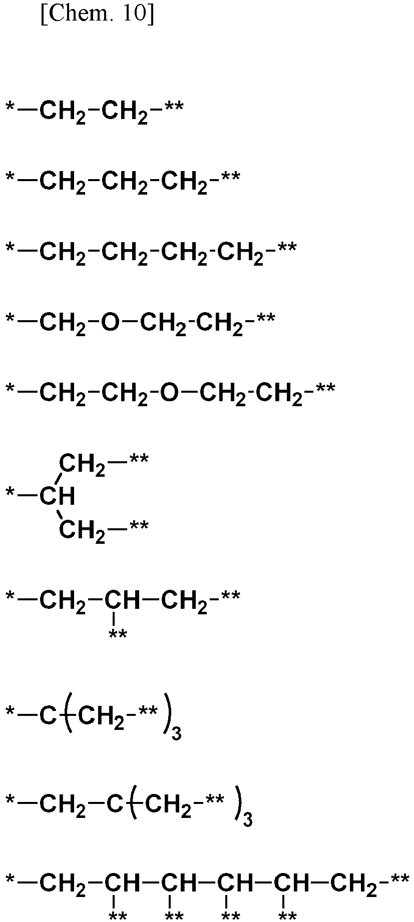

Herein * designates a point of attachment to N and ** designates a point of attachment to X².

In the formula (1), X² is independently a monovalent organic group containing an acryloyl or α-substituted acryloyl group. At least one acryloyl or α-substituted acryloyl group is contained per molecule on the average.

X² preferably has a structure of the following formula.

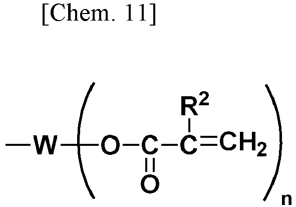

Herein R² is independently hydrogen, fluorine, methyl or trifluoromethyl, W is a single bond, or a di- or trivalent hydrocarbon group which may contain at least one bond selected from ether bond, ester bond and urethane bond, and n is 1 or 2.

In the above formula, W is a single bond, or a di- or trivalent hydrocarbon group which may contain at least one bond selected from ether bond, ester bond and urethane bond. Examples of the di- or trivalent hydrocarbon group include groups having the following formulae.

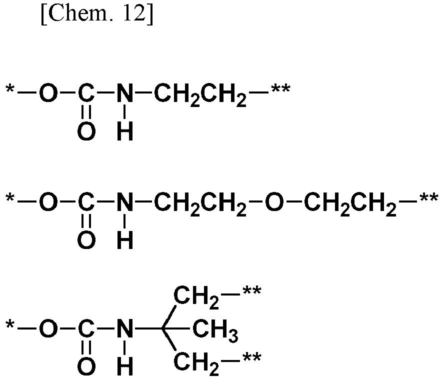

Herein * designates a point of attachment to Y² in the formula (1) and ** designates a point of attachment to the oxygen atom.

More preferred structures of X² are shown below.

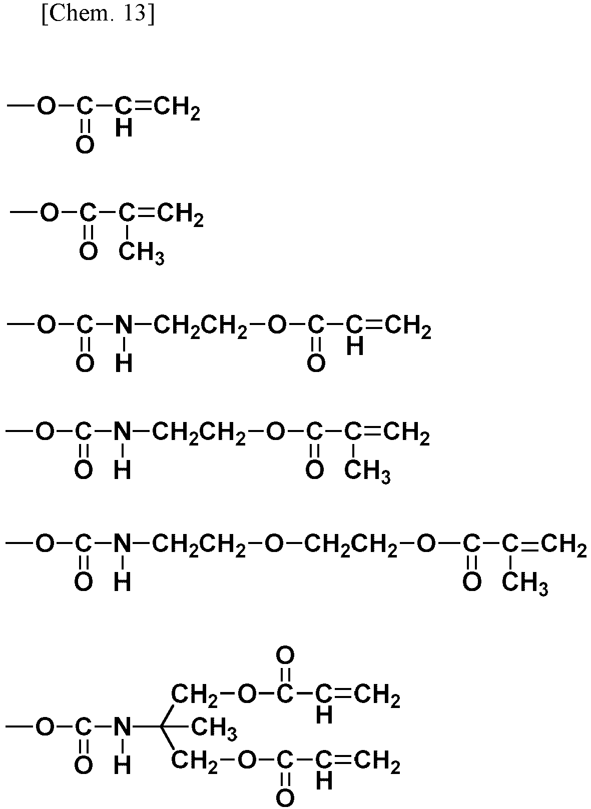

In the formula (1), V² is hydrogen, fluorine or a monovalent group of the formula: -C(=O)-NR¹ₐ[Y²(X²)_{b'}]₂₋ₐ, preferably a monovalent group of the formula: -C(=O)-NR¹ₐ[Y²(X²)_{b'}]₂₋ₐ.

When V² is a monovalent group of the formula: -C(=O)-NR¹ₐ[Y²(X²)_{b'}]₂₋ₐ, which indicates that at least two acryloyl or α-substituted acryloyl groups are contained per molecule on the average, a composition comprising the relevant compound forms a reticulate network and cures into a cured product having satisfactory dynamic properties. It is noted that when V² is a monovalent group of the formula: -C(=O)-NR¹ₐ[Y²(X²)_{b'}]₂₋ₐ, a plurality of R¹, Y², X², b', and a in formula (1) may be identical or different.

In the formula (1), a is 0 or 1, preferably 1. In the formula (1), b' is an integer of 1 to 10, preferably 1 or 2.

Preferred examples of the fluoropolyether-containing acrylic compound having the formula (1) include compounds of the following formulae.

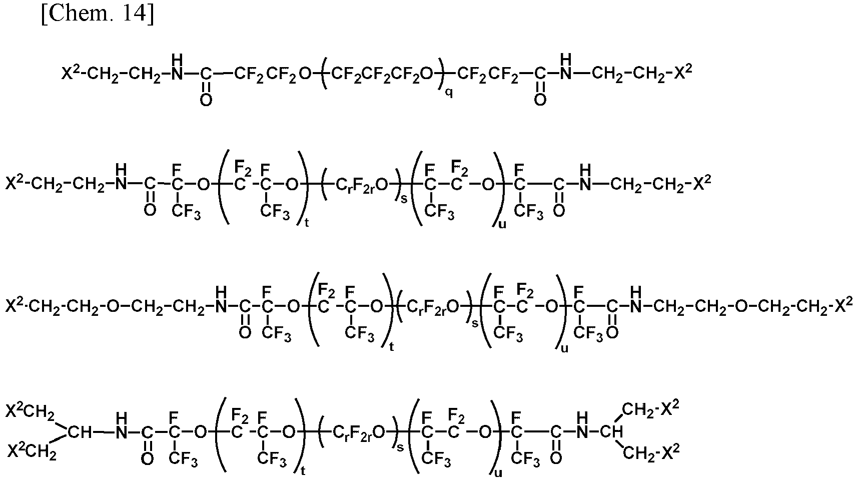

Herein X², q, r, s, t and u are as defined above.

More preferred examples of the fluoropolyether-containing acrylic compound having the formula (1) include compounds of the following formulae.

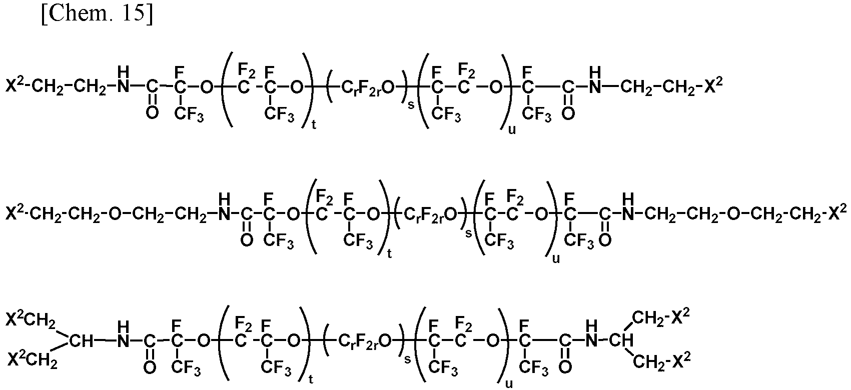

Herein X², r, s, t and u are as defined above.

One exemplary fluoropolyether-containing acrylic compound having the formula (1) wherein V² is a monovalent group of the formula: -C(=O)-NR¹ₐ[Y²(X²)_{b'}]₂₋ₐ is a fluoropolyether-containing acrylic compound having the general formula (2):

Rf²[C(=O)-NR¹ₐ[Y²(X²)_{b'}]₂₋ₐ]₂ (2)

wherein Rf², R¹, Y², X², a and b' are as defined above. This fluoropolyether-containing acrylic compound having the formula (2) is preferably synthesized, for example, by effecting amidation reaction of a fluoropolyether-containing compound containing acid halide or ester at the end of the molecular chain, having the general formula (3):

   Rf²[C(=O)-X³]₂ (3)
wherein Rf² is as defined above, and X³ is halogen or unsubstituted or fluorine-substituted alkoxy group with an aminoalcohol compound having the general formula (4):

   H-NR¹ₐ[Y²(OH)_{b'}]₂₋ₐ (4)
wherein R¹, Y², a and b' are as defined above, to form an intermediate, fluoropolyether-containing alcohol compound.

In the formula (3), X³ is halogen or an unsubstituted or fluorine-substituted alkoxy group of preferably 1 to 10 carbon atoms, more preferably 1 to 6 carbon atoms. Examples include halogen atoms such as fluorine, chlorine and bromine, alkoxy groups such as methoxy, ethoxy, propoxy, isopropoxy, butoxy, isobutoxy, tert-butoxy, hexyloxy, and octyloxy, and fluorine-substituted alkoxy groups obtained by substituting fluorine for some or all of the hydrogen atoms in the foregoing groups, such as trifluoromethoxy, 2,2,2-trifluoroethoxy, and 1,1,1,3,3,3-hexafluoroisopropoxy.

Examples of the fluoropolyether-containing compound containing acid halide or ester at the molecular end, having the formula (3) are shown below.

Rf²[C(=O)-Cl]₂

Rf²[C(=O)-F]₂

Rf²[C(=O)-O-CH₃]₂

Rf²[C(=O)-O-C₂H₅]₂

Rf²[C(=O)-O-C₃H₇]₂

Rf²[C(=O)-O-C₄H₉]₂

Rf²[C(=O)-O-C₅H₁₁]₂

Rf²[C(=O)-O-C₆H₁₃]₂

Rf²[C(=O)-O-CF₃]₂

Rf²[C(=O)-O-C₂F₅]₂

Rf²[C(=O)-O-CH(CF₃)₂]₂

Herein Rf² is as defined above.

Examples of the aminoalcohol compound having the formula (4) are shown below.

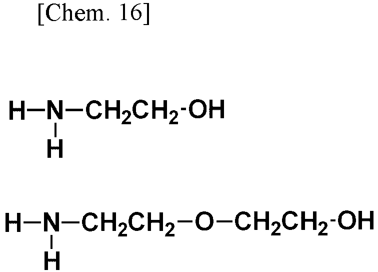

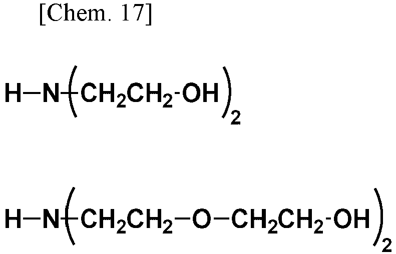

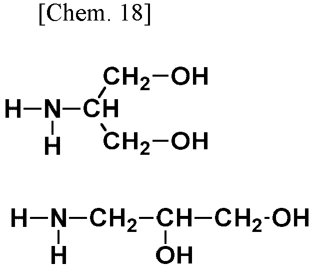

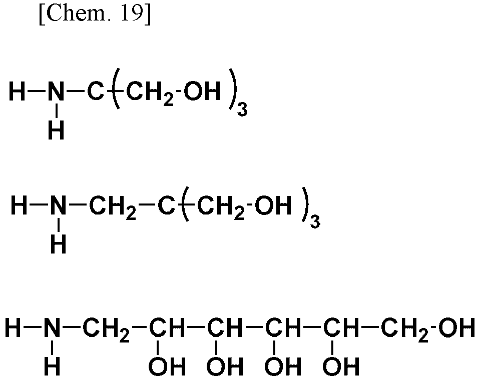

In the reaction, the fluoropolyether-containing compound containing acid halide or ester at the molecular end, having the formula (3) and the aminoalcohol compound having the formula (4) are desirably used in such a ratio that the molar amount of the aminoalcohol compound having the formula (4) may be 1 to 12 times, especially 1.2 to 6 times greater than the total moles of acid halide or ester groups in the fluoropolyether-containing compound containing acid halide or ester at the molecular end, having the formula (3). If the amount of the aminoalcohol compound having the formula (4) is less than the range, it is sometimes difficult to obtain the desired fluoropolyether-containing alcohol compound.

The amidation reaction is desirably carried out by mixing the fluoropolyether-containing compound containing acid halide or ester at the molecular end, having the formula (3) with the aminoalcohol compound having the formula (4), and effecting reaction at a temperature of 0 to 100°C, preferably 0 to 80°C, for 1 minute to 48 hours, preferably 10 minutes to 12 hours. At too low a temperature, the reaction may sometimes stop before running to a full extent. At too high a temperature, undesired side reactions or decomposition of the reactants can occur.

Although the amidation reaction can be carried out in a solventless system, the reaction system may be diluted with a solvent if necessary. Although any organic solvents commonly used in the art may be utilized as the diluent solvent, a solvent which has a boiling point above the reaction temperature and does not inhibit the reaction is preferred. Preferred examples of the solvent include partially fluorine-modified solvents, for example, fluorine-modified aromatic hydrocarbon solvents such as m-xylene hexafluoride and benzotrifluoride, and fluorine-modified ether solvents such as methyl perfluorobutyl ether. Inter alia, m-xylene hexafluoride is especially preferred.

When used, the amount of the solvent added is preferably 5 to 2,000 parts by weight, more preferably 50 to 500 parts by weight per 100 parts by weight of the fluoropolyether-containing compound containing acid halide or ester at the molecular end, having the formula (3). Outside the range, a smaller amount of the solvent exerts a weak dilution effect whereas a larger amount provides too high a degree of dilution, inviting a decline of reaction rate.

At the end of reaction, the unreacted aminoalcohol compound having the formula (4) and diluent solvent are preferably removed by any well-known methods such as vacuum distillation, extraction and adsorption.

By carrying out amidation reaction of the fluoropolyether-containing compound containing acid halide or ester at the molecular end, having the formula (3) with the aminoalcohol compound having the formula (4), there is obtained a fluoropolyether-containing alcohol compound having the general formula (5):

Rf²[C(=O)-NR¹ₐ[Y²(OH)_{b'}]₂₋ₐ]₂ (5)

wherein Rf², R¹, Y², a and b' are as defined above.

Examples of the fluoropolyether-containing alcohol compound having the formula (5) are shown below.

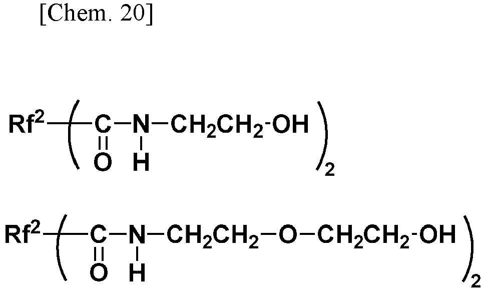

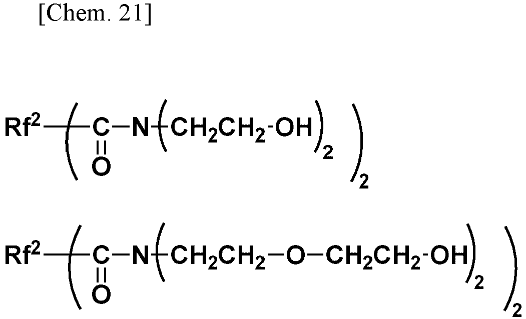

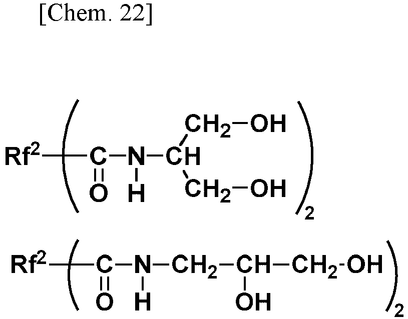

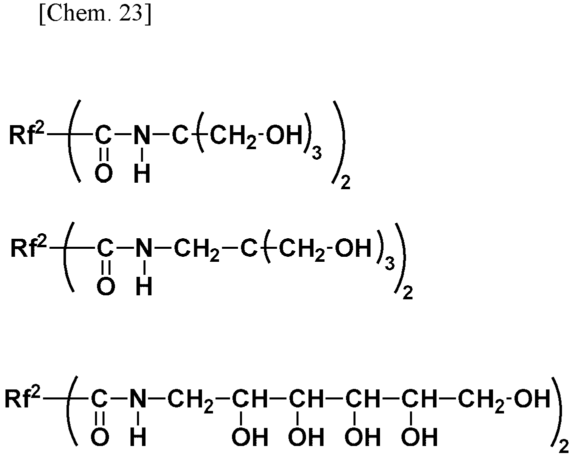

Herein Rf² is as defined above.

Next, a (meth)acryloyl group is introduced into the fluoropolyether-containing alcohol compound having the formula (5), obtaining the desired fluoropolyether-containing acrylic compound having the formula (2).

One exemplary method of introducing a (meth)acryloyl group into the fluoropolyether-containing alcohol compound having the formula (5) is a method of reacting the fluoropolyether-containing alcohol compound having the formula (5) with an isocyanate compound having a (meth)acryloyl group.

Examples of the isocyanate compound having a (meth)acryloyl group are shown below.

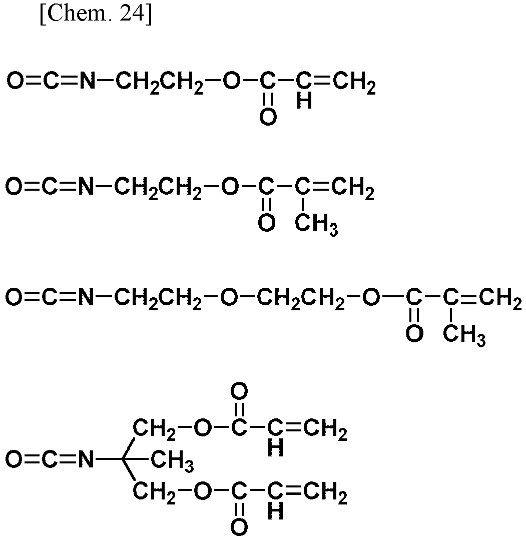

The isocyanate compound having a (meth)acryloyl group may be fed in an amount which is at least equimolar to the total of hydroxy groups in the fluoropolyether-containing alcohol compound whereby all the hydroxy groups are reacted. However, it suffices that the isocyanate compound having a (meth)acryloyl group is fed in such an amount as to introduce on the average at least 1 mole of (meth)acryloyl group per mole of the fluoropolyether-containing alcohol compound. It is also acceptable that hydroxy groups remain in excess such that no isocyanate compound having a (meth)acryloyl group is left unreacted. Specifically, provided that the amount of the fluoropolyether-containing alcohol compound in the reaction system is "x" mol and the total amount of hydroxy group in the fluoropolyether-containing alcohol compound is "y" mol, the amount of the isocyanate compound having a (meth)acryloyl group is desirably from x mol to 2y mol, more desirably from x mol and 0.6y mol to 1.4y mol. If the amount is too small, there is a strong possibility that the fluoropolyether-containing alcohol compound having no (meth)acryloyl groups introduced at all is left behind. If the amount is too large, it is difficult to remove the unreacted isocyanate compound having a (meth)acryloyl group.

The reaction may be carried out after the system is diluted with a suitable solvent if necessary. Any solvents may be used as the diluent without particular limits as long as the solvents are inert to hydroxy groups in the fluoropolyether-containing alcohol compound and isocyanate groups in the isocyanate compound having a (meth)acryloyl group. Exemplary solvents include hydrocarbon solvents such as toluene, xylene and isooctane, ether solvents such as tetrahydrofuran (THF), diisopropyl ether, and dibutyl ether, ketone solvents such as acetone, methyl ethyl ketone, methyl butyl ketone, methyl isobutyl ketone, and cyclohexanone, fluorine-modified aromatic hydrocarbon solvents such as m-xylene hexafluoride, also known as hexafluoro-m-xylene, and benzotrifluoride, and fluorine-modified ether solvents such as methyl perfluorobutyl ether. The solvent may be removed at the end of reaction by a well-known method such as vacuum distillation, or be left as such and utilized as a diluent depending on a particular purpose.

Although the amount of the solvent used is not particularly limited, it is preferably up to 10 times the total weight of all reactants. A too much amount of the solvent may lead to a substantial decline of reaction rate.

During the reaction, a polymerization inhibitor may be added if necessary. Although the polymerization inhibitor is not particularly limited, a polymerization inhibitor commonly used for acrylic compounds may be selected. Exemplary inhibitors include hydroquinone, hydroquinone monomethyl ether, 4-tert-butyl catechol, and dibutyl hydroxytoluene.

The amount of the polymerization inhibitor used may be determined in accordance with reaction conditions, purifying conditions after reaction, and final use conditions and is not particularly limited. Most often, the amount is preferably 0.01 to 5,000 ppm, more preferably 0.1 to 500 ppm based on the total weight of all reactants.

In the reaction, a suitable catalyst may be added to accelerate the reaction rate. Examples of the catalyst include alkyltin ester compounds such as dibutyltin diacetate, dibutyltin dilaurate, dibutyltin dioctoate, dioctyltin diacetate, dioctyltin dilaurate, dioctyltin dioctate, and stannous dioctanoate; titanate esters or titanium chelate compounds such as tetraisopropoxytitanium, tetra-n-butoxytitanium, tetrakis(2-ethylhexoxy)titanium, also known as tetrakis(2-ethylhexyl) orthotitanate, dipropoxybis(acetylacetonato)titanium, and titanium isopropoxyoctylene glycol; zirconium tetraacetylacetonate, zirconium tributoxymonoacetylacetonate, zirconium monobutoxyacetylacetonate bis(ethyl acetoacetate), zirconium dibutoxybis(ethyl acetoacetate), zirconium tetraacetylacetonate, zirconium chelates, and bismuth carboxylate compounds. These compounds may be used alone or in admixture. In particular, titanium compounds and bismuth compounds are preferred from the aspects of toxicity and reactivity.

The reaction rate can be increased by adding the catalyst in an amount of 0.01 to 2% by weight, preferably 0.05 to 1% by weight of the total weight of all reactants.

The reaction is carried out at a temperature of 0 to 120°C, preferably 10 to 100°C, for 1 minute to 500 hours, preferably 10 minutes to 48 hours. At too low a temperature, the reaction rate may become too slow. At too high a temperature, polymerization of (meth)acryloyl groups can occur as side reaction.

At the end of reaction, the unreacted isocyanate compound and solvent are removed by any suitable methods such as distillation, adsorption, filtration, and washing. In this way, the fluoropolyether-containing acrylic compound having the formula (2) is obtained.

In stopping the reaction, an alcohol compound such as methanol or ethanol may be added to the reaction system to form a urethane bond with the unreacted isocyanate compound. The urethane (meth)acrylate thus formed can be removed by the same method as the unreacted isocyanate compound although the reaction product may be used without removing the urethane (meth)acrylate.

Another method of introducing a (meth)acryloyl group into the fluoropolyether-containing alcohol compound having the formula (5) is a method of reacting the fluoropolyether-containing alcohol compound having the formula (5) with a (meth)acrylic halide to form an ester.

The following compounds are exemplary of the (meth)acrylic halide. 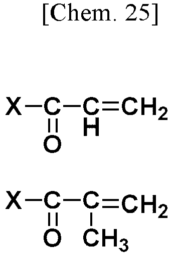 Herein X is a halogen such as fluorine, chlorine or bromine.

Inter alia, acrylic chloride and methacrylic chloride are preferred.

The (meth)acrylic halide is desirably fed in an amount which is at least equimolar to the total of hydroxy groups in the fluoropolyether-containing alcohol compound whereby all the hydroxy groups are reacted. Specifically, the reaction is desirably carried out by using the (meth)acrylic halide in a molar amount of 1 to 6 times, especially 1.2 to 4 times greater than the molar amount of hydroxy groups in the fluoropolyether-containing alcohol compound in the reaction system. If the amount of the (meth)acrylic halide is too small, there is a strong possibility that the fluoropolyether-containing alcohol compound having no (meth)acryloyl groups introduced at all is left behind.

In the ester-forming step of reacting the fluoropolyether-containing alcohol compound with a (meth)acrylic halide, an acid acceptor is preferably used. The fluoropolyether-containing alcohol compound having the formula (5), the (meth)acrylic halide and the acid acceptor are mixed and stirred. For example, triethylamine, pyridine and urea may be used as the acid acceptor.

The amount of the acid acceptor used is desirably 0.9 to 3 times the moles of the (meth)acrylic halide. If the amount is too small, more acid is left non-trapped. If the amount is too large, it is difficult to remove the excess of acid acceptor.

The reaction may be carried out after the system is diluted with a suitable solvent if necessary. Any solvents may be used as the diluent without particular limits as long as the solvents are inert to hydroxy groups in the fluoropolyether-containing alcohol compound and halogen in the (meth)acrylic halide. Exemplary solvents include hydrocarbon solvents such as toluene, xylene and isooctane, ether solvents such as tetrahydrofuran (THF), diisopropyl ether, and dibutyl ether, ketone solvents such as acetone, methyl ethyl ketone, methyl butyl ketone, methyl isobutyl ketone, and cyclohexanone, fluorine-modified aromatic hydrocarbon solvents such as m-xylene hexafluoride, also known as hexafluoro-m-xylene, and benzotrifluoride, and fluorine-modified ether solvents such as methyl perfluorobutyl ether. The solvent may be removed at the end of reaction by a well-known method such as vacuum distillation, or be left as such and utilized as a diluent depending on a particular purpose.

Although the amount of the solvent used is not particularly limited, it is preferably up to 10 times the total weight of all reactants. A too large amount of the solvent may lead to a substantial decline of reaction rate.

The reaction is carried out at a temperature of 0 to 120°C, preferably 10 to 100°C, for 1 minute to 500 hours, preferably 10 minutes to 48 hours. At too low a temperature, the reaction rate may become too slow. At too high a temperature, polymerization of (meth)acryloyl groups can occur as side reaction.

At the end of reaction, the unreacted (meth)acrylic halide and solvent are removed by any suitable methods such as distillation, adsorption, filtration, and washing. In this way, the fluoropolyether-containing acrylic compound having the formula (2) is obtained.

The fluoropolyether-containing acrylic compound of the invention preferably has a refractive index of up to 1.390, more preferably up to 1.380, even more preferably up to 1.370 at temperature 25°C and wavelength 589 nm. The compound having a refractive index in the range forms a cured product having a low refractive index which is useful in the optical part application. It is noted that refractive index is measured by a refractometer such as Abbe refractometer. In order that the fluoropolyether-containing acrylic compound has a refractive index of up to 1.390 under the above-specified conditions, the compound should have a divalent perfluoropolyether group composed of C₁-C₆ perfluoroalkylene groups and oxygen and having a Mn of 500 to 40,000.

Now that the fluoropolyether-containing acrylic compound thus obtained has a perfluoropolyether group as a group for providing a low refractive index, an amide bond as a group for enhancing compatibility with a photopolymerization initiator, and an acryloyl or α-substituted acryloyl group, the compound has a low refractive index and is compatible with a photopolymerization initiator to form a transparent composition. The fluoropolyether-containing acrylic compound is thus useful as one component of a fluorinated, actinic energy ray-curable composition which is curable with actinic energy ray such as UV or EB.

### EXAMPLES

Synthesis Examples, Comparative Synthesis Examples, Examples, and Comparative Examples are given below for illustrating the invention, but the invention is not limited thereto. Herein, the number average molecular weight (Mn) of a perfluoropolyether group is computed from a characteristic peak intensity ratio of end structure to backbone structure of a fluoropolyether-containing acrylic compound as analyzed by ¹⁹F-NMR spectroscopy.

### [Synthesis Example 1] Synthesis of fluoropolyether-containing acrylic compound (A-1)

In a dry nitrogen atmosphere, a reactor was charged with 100 g (0.025 mol) of compound (I) whose average structure has the formula:

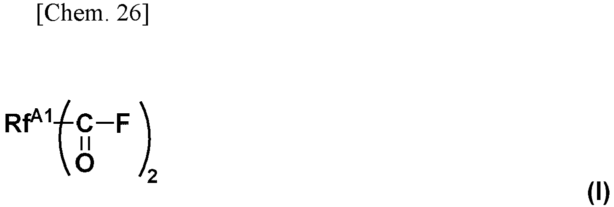

**Rf^{A1}: -CF₂CF₂O-(CF₂CF₂CF₂O)₂₅-CF₂CF₂-,**

wherein Rf^{A1} has a Mn of approximately 4,400, 12.2 g (0.20 mol) of compound (i) having the formula: 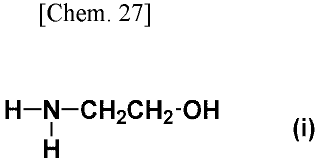
and 100 g of m-xylene hexafluoride, which were stirred at 60°C for 3 hours in dry nitrogen atmosphere. On IR analysis of the reaction solution, the disappearance of bands assigned to -C(=O)F bond was confirmed. The reaction solution was washed with water and distilled under reduced pressure, obtaining 92.3 g of fluoropolyether-containing alcohol compound (II) having the following structural formula.

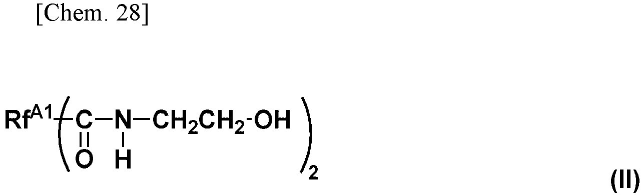

   **Rf^{A1}: -CF₂CF₂O-(CF₂CF₂CF₂O)₂₅-CF₂CF₂-**

Herein Rf^{A1} has a Mn of approximately 4,400.

In a reactor under dry air atmosphere, 50.0 g (hydroxy content 0.024 mol) of fluoropolyether-containing alcohol compound (II) obtained above was mixed with 50.0 g of THF and 3.6 g (0.024 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 46.3 g of a highly viscous liquid substance. By ¹H-NMR and IR analyses, it was identified to be fluoropolyether-containing acrylic compound (A-1).

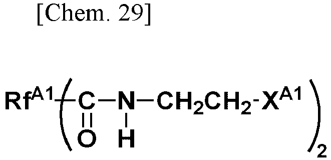

**Rf^{A1}: -CF₂CF₂O-(CF₂CF₂CF₂O)₂₅-CF₂CF₂- (A-1)**

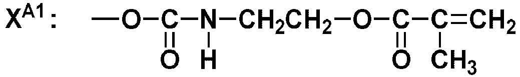

Herein Rf^{A1} has a Mn of approximately 4,400.

### [Synthesis Example 2] Synthesis of fluoropolyether-containing acrylic compound (A-2)

In a dry nitrogen atmosphere, a reactor was charged with 100 g (0.017 mol) of compound (III) whose average structure has the formula: 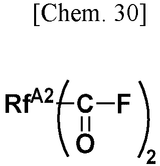 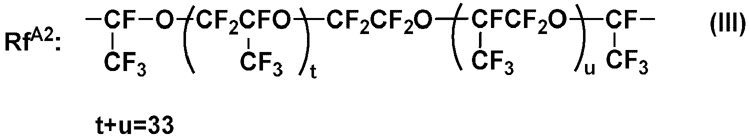
wherein Rf^{A2} has a Mn of approximately 5,800,
8.5 g (0.14 mol) of compound (i) having the formula: 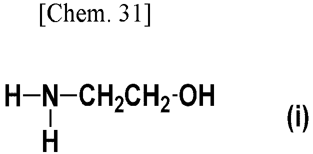
and 100 g of m-xylene hexafluoride, which were stirred at 65°C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 94.4 g of fluoropolyether-containing alcohol compound (IV) having the following structural formula.

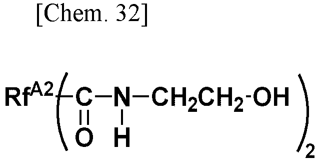

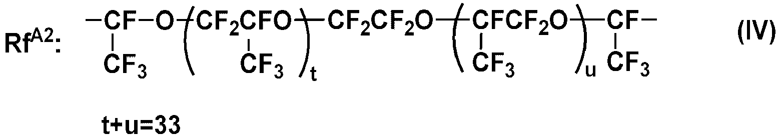

Herein Rf^{A2} has a Mn of approximately 5,800.

In a reactor under dry air atmosphere, 50.0 g (hydroxy content 0.017 mol) of fluoropolyether-containing alcohol compound (IV) obtained above was mixed with 50.0 g of m-xylene hexafluoride, 3.6 g (0.034 mol) of methacrylic chloride, and 4.4 g (0.043 mol) of triethylamine, which was stirred at 50°C for 24 hours. The heating step was followed by water washing and distillation under reduced pressure, obtaining 39.9 g of a highly viscous liquid substance. By ¹H-NMR and IR analyses, it was identified to be fluoropolyether-containing acrylic compound (A-2).

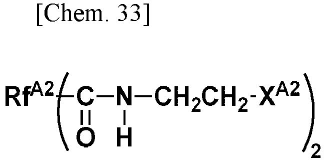

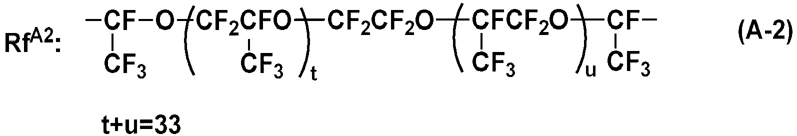

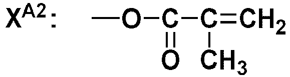

Herein Rf^{A2} has a Mn of approximately 5,800.

### [Synthesis Example 3] Synthesis of fluoropolyether-containing acrylic compound (A-3)

In a reactor under dry air atmosphere, 50.0 g (hydroxy content 0.017 mol) of fluoropolyether-containing alcohol compound (IV) prepared as in Synthesis Example 2 was mixed with 50.0 g of THF and 2.6 g (0.017 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 48.3 g of a highly viscous liquid substance. By ¹H-NMR and IR analyses, it was identified to be fluoropolyether-containing acrylic compound (A-3).

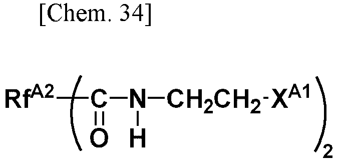

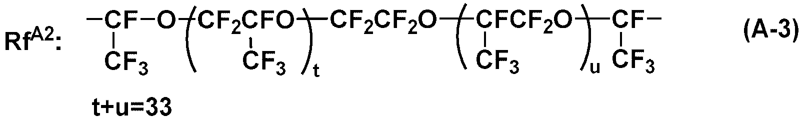

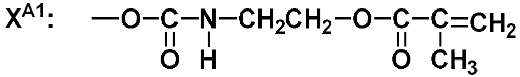

Herein Rf^{A2} has a Mn of approximately 5,800.

### [Synthesis Example 4] Synthesis of fluoropolyether-containing acrylic compound (A-4)

In a reactor under dry air atmosphere, 50.0 g (hydroxy content 0.017 mol) of fluoropolyether-containing alcohol compound (IV) prepared as in Synthesis Example 2 was mixed with 50.0 g of THF and 4.1 g (0.017 mol) of 1,1-(bisacryloyloxymethyl)ethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 37.3 g of a highly viscous liquid substance. By ¹H-NMR and IR analyses, it was identified to be fluoropolyether-containing acrylic compound (A-4).

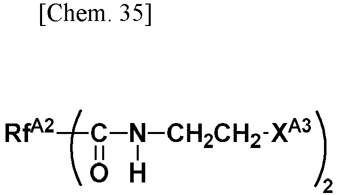

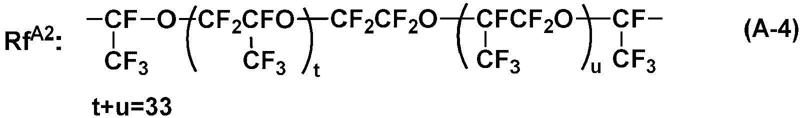

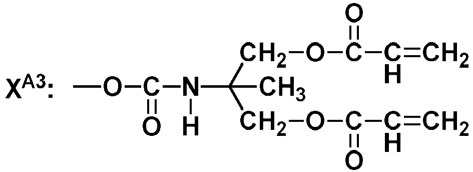

Herein Rf^{A2} has a Mn of approximately 5,800.

### [Synthesis Example 5] Synthesis of fluoropolyether-containing acrylic compound (A-5)

In a dry nitrogen atmosphere, a reactor was charged with 100 g (0.0063 mol) of compound (V) whose average structure has the formula: 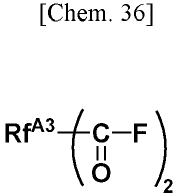 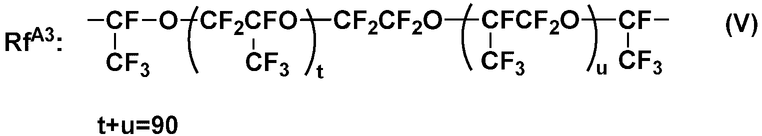
wherein Rf^{A3} has a Mn of approximately 15,300,
3.1 g (0.05 mol) of compound (i) having the formula: 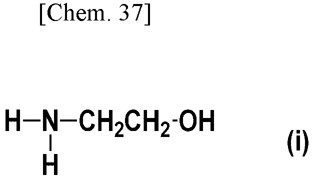
and 100 g of m-xylene hexafluoride, which were stirred at 65°C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 73.2 g of fluoropolyether-containing alcohol compound (VI) having the following structural formula.

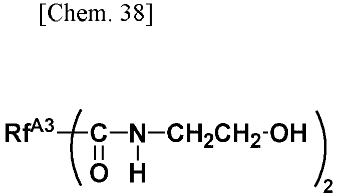

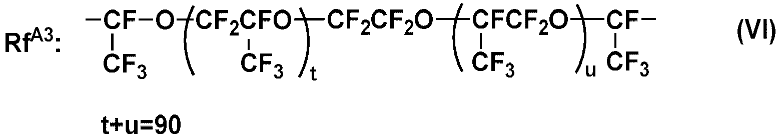

Herein Rf^{A3} has a Mn of approximately 15,300.

In a reactor under dry air atmosphere, 50.0 g (hydroxy content 0.0063 mol) of fluoropolyether-containing alcohol compound (VI) obtained above was mixed with 50.0 g of THF and 0.98 g (0.0063 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 32.8 g of a highly viscous liquid substance. By ¹H-NMR and IR analyses, it was identified to be fluoropolyether-containing acrylic compound (A-5).

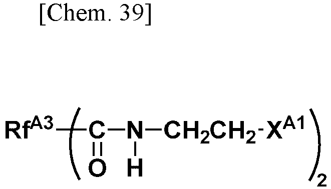

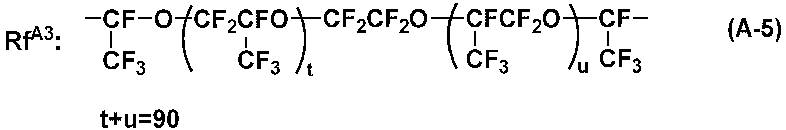

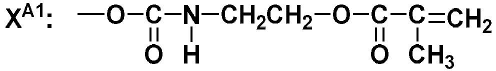

Herein Rf^{A3} has a Mn of approximately 15,300.

### [Synthesis Example 6] Synthesis of fluoropolyether-containing acrylic compound (A-6)

In a dry nitrogen atmosphere, a reactor was charged with 100 g (0.017 mol) of compound (III) whose average structure has the formula: 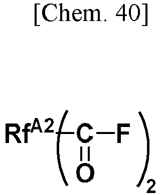 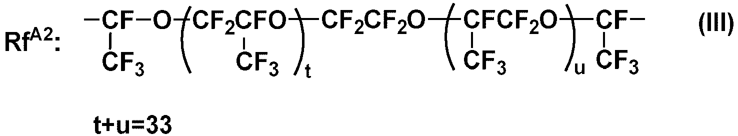
wherein Rf^{A2} has a Mn of approximately 5,800,
12.8 g (0.14 mol) of compound (ii) having the formula: 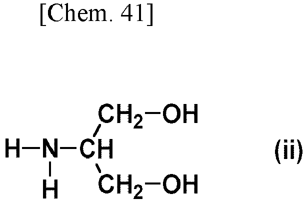
and 100 g of m-xylene hexafluoride, which were stirred at 65°C for 8 hours in dry nitrogen atmosphere. On IR analysis of the reaction solution, the disappearance of bands assigned to -C(=O)F bond was confirmed. The reaction solution was washed with water and distilled under reduced pressure, obtaining 88.7 g of fluoropolyether-containing alcohol compound (VII) having the following structural formula.

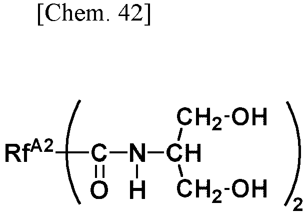

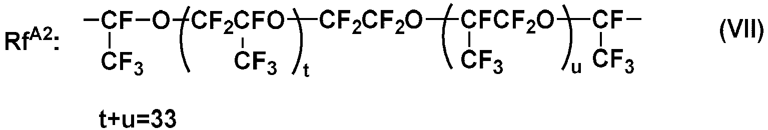

Herein Rf^{A2} has a Mn of approximately 5,800.

In a reactor under dry air atmosphere, 50.0 g (hydroxy content 0.033 mol) of fluoropolyether-containing alcohol compound (VII) obtained above was mixed with 50.0 g of THF and 5.1 g (0.033 mol) of methacryloyloxyethyl isocyanate, which was heated at 50°C. To the reactor, 0.15 g of bismuth carboxylate catalyst (XK-640 by Kusumoto Chemicals, Ltd.) was added, followed by 24 hours of stirring at 50°C. The heating step was followed by distillation under reduced pressure, obtaining 36.6 g of a highly viscous liquid substance. By ¹H-NMR and IR analyses, it was identified to be fluoropolyether-containing acrylic compound (A-6).

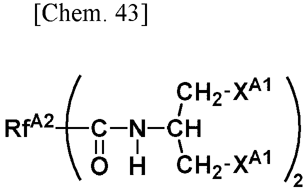

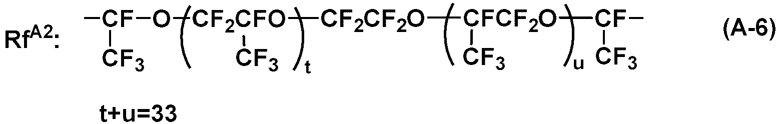

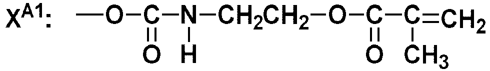

Herein Rf^{A2} has a Mn of approximately 5,800.

### [Comparative Synthesis Example 1] Synthesis of fluoropolyether-containing acrylic compound (A-7)

In a dry nitrogen atmosphere, a reactor was charged with 100 g (0.017 mol) of compound (III) whose average structure has the formula: 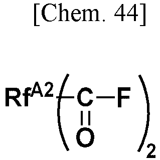 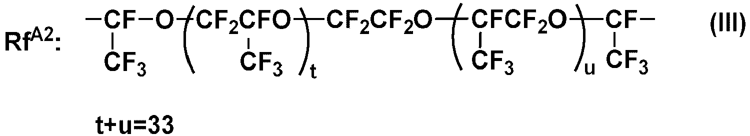
wherein Rf^{A2} has a Mn of approximately 5,800,
6.6 g (0.051 mol) of compound (iii) having the formula: 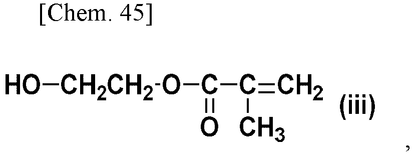
50.0 g of m-xylene hexafluoride, and 5.2 g (0.051 mol) of triethylamine, which were stirred at 50°C for 24 hours. The heating step was followed by water washing and distillation under reduced pressure, obtaining 34.4 g of a highly viscous liquid substance. By ¹H-NMR and IR analyses, it was identified to be fluoropolyether-containing acrylic compound (A-7).

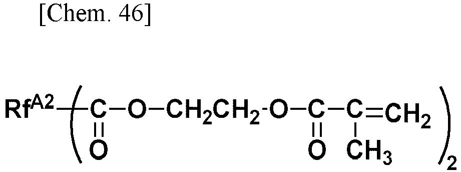

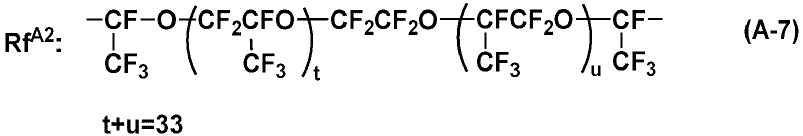

Herein Rf^{A2} has a Mn of approximately 5,800.

### Evaluation of refractive index of compound

The refractive index of a compound was measured at temperature 25°C and wavelength 589 nm by an Abbe refractometer (DR-A1 by Atago Co., Ltd.). The results are shown in Table 1.

**[Table 1]**

| Fluoropolyether-containing acrylic compound | Refractive index (-) |
|---|---|
| (A-1) | 1.324 |
| (A-2) | 1.317 |
| (A-3) | 1.323 |
| (A-4) | 1.332 |
| (A-5) | 1.298 |
| (A-6) | 1.339 |
| (A-7) | 1.312 |

### [Examples 1 to 6 and Comparative Example 1]

### Evaluation of compatibility of compound with photopolymerization initiator

Each of fluoropolyether-containing acrylic compounds (A-1) to (A-6) obtained in Synthesis Examples 1 to 6 or fluoropolyether-containing acrylic compound (A-7) obtained in Comparative Synthesis Example 1 was mixed with a photopolymerization initiator (2-hydroxy-2-methylpropiophenone or 2-diphenyl(2,4,6-trimethylbenzoyl)phosphine oxide) in the blending amounts shown below to form a blended composition. The blended composition was evaluated for outer appearance by visual observation according to the following criteria. The results are shown in Table 2.
Blend A:
   100 parts by weight of fluoropolyether-containing acrylic compound and
   1 part by weight of 2-hydroxy-2-methylpropiophenone
      ○ (good): composition of blend A has a uniform outer appearance
      × (poor): composition of blend A has a nonuniform outer appearance
Blend B:
   100 parts by weight of fluoropolyether-containing acrylic compound and
   1 part by weight of 2-diphenyl(2,4,6-trimethylbenzoyl)phosphine oxide
      ○(good): composition of blend B has a uniform outer appearance
      × (poor): composition of blend B has a nonuniform outer appearance

**[Table 2]**

| | Fluoropolyether-containing acrylic compound | Outer appearance of blend A | Outer appearance of blend B |
|---|---|---|---|
| Example 1 | (A-1) | ○ | ○ |
| Example 2 | (A-2) | ○ | ○ |
| Example 3 | (A-3) | ○ | ○ |
| Example 4 | (A-4) | ○ | ○ |
| Example 5 | (A-5) | ○ | ○ |
| Example 6 | (A-6) | ○ | ○ |
| Comparative Example 1 | (A-7) | × | × |

The fluoropolyether-containing acrylic compounds (A-1) to (A-6) within the scope of the invention showed a low refractive index. Examples 1 to 6 using fluoropolyether-containing acrylic compounds (A-1) to (A-6) within the scope of the invention were fully compatible with photopolymerization initiators. Although fluoropolyether-containing acrylic compound (A-7) which is free of an amide bond in its structure showed a low refractive index, Comparative Example 1 using fluoropolyether-containing acrylic compound (A-7) was poorly compatible with photopolymerization initiators.

## Claims

1. A fluoropolyether-containing acrylic compound having the general formula (1):
V²-Rf²-C(=O)-NR¹ₐ[Y²(X²)_{b'}]₂₋ₐ (1)
wherein Rf² is a divalent perfluoropolyether group composed of C₁-C₆ perfluoroalkylene groups and oxygen and having a number average molecular weight of 500 to 40,000, Y² is independently a (b'+1)-valent C₁-C₂₀ organic group, X² is independently a monovalent organic group containing an acryloyl or α-substituted acryloyl group, at least one acryloyl or α-substituted acryloyl group being contained per molecule on the average, R¹ is hydrogen or a C₁-C₈ monovalent hydrocarbon group, V² is hydrogen, fluorine or a monovalent group of the formula: -C(=O)-NR¹ₐ[Y²(X²)_{b'}]₂₋ₐ, a is 0 or 1, and b' is an integer of 1 to 10.

2. The fluoropolyether-containing acrylic compound of claim 1 wherein in the formula (1), Rf² is a divalent perfluoropolyether group having the following formula: 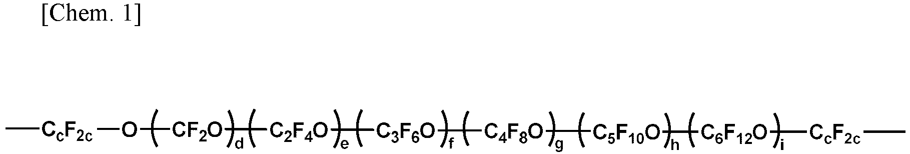 wherein c is independently for each unit an integer of 2 to 6, d, e, f, g, h and i are each an integer of 0 to 200, d+e+f+g+h+i = 4 to 200, each unit may be straight or branched, individual units in parentheses with subscripts d, e, f, g, h and i may be randomly arranged.

3. The fluoropolyether-containing acrylic compound of claim 1 or 2 wherein in the formula (1), Rf² is selected from divalent perfluoropolyether groups having the following structural formulae:
-CF₂CF₂O-(CF₂CF₂CF₂O)_{q}-CF₂CF₂-
wherein q is an integer of 4 to 200, 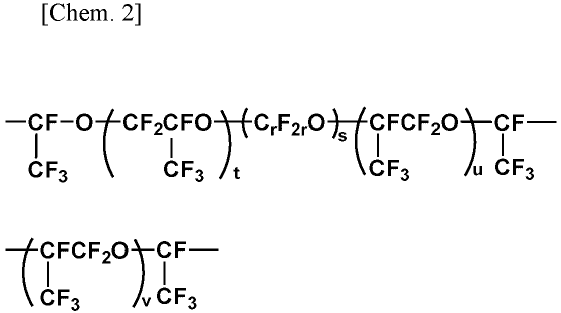
wherein r is an integer of 1 to 6, CᵣF₂ᵣO may be straight or branched, s is an integer of 0 to 6,
t and u each are an integer of 1 to 200, t+u is an integer of 2 to 200, s+t+u is an integer of 4 to 200, and v is an integer of 5 to 200.

4. The fluoropolyether-containing acrylic compound of any one of claims 1 to 3 wherein in the formula (1), R¹ is hydrogen and a is 1.

5. The fluoropolyether-containing acrylic compound of any one of claims 1 to 4 wherein in the formula (1), Y² is selected from groups having the following formulae: 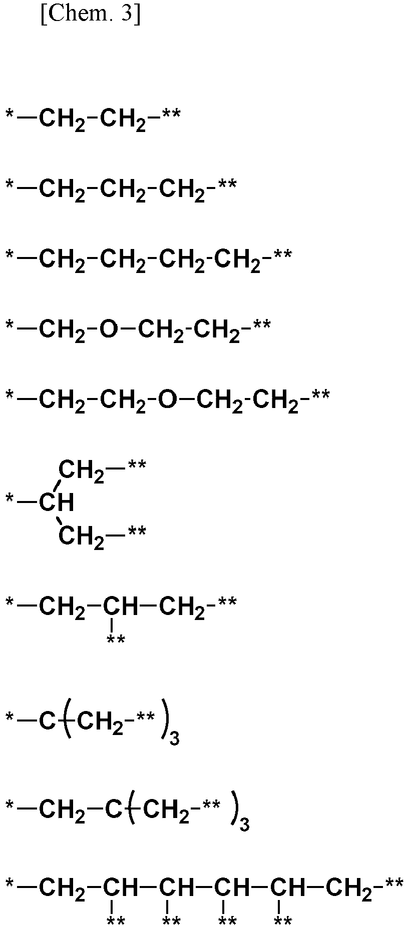 wherein * designates a point of attachment to N and ** designates a point of attachment to X².

6. The fluoropolyether-containing acrylic compound of any one of claims 1 to 5 wherein in the formula (1), X² has the following structural formula: 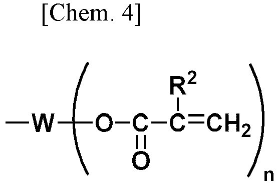 wherein R² is independently hydrogen, fluorine, methyl or trifluoromethyl, W is a single bond, or a di- or trivalent hydrocarbon group which may contain at least one bond selected from ether bond, ester bond and urethane bond, and n is 1 or 2.

7. The fluoropolyether-containing acrylic compound of any one of claims 1 to 6 wherein in the formula (1), X² is selected from groups having the following formulae.

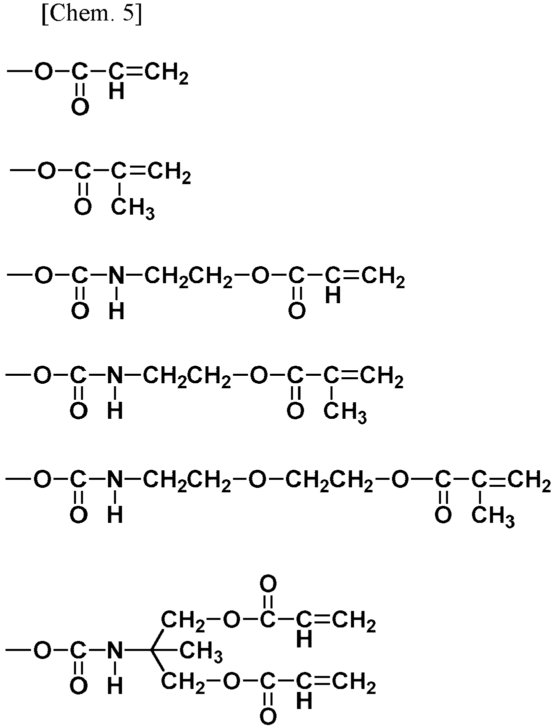

8. The fluoropolyether-containing acrylic compound of any one of claims 1 to 7 wherein the fluoropolyether-containing acrylic compound having the formula (1) has any one of the following formulae: 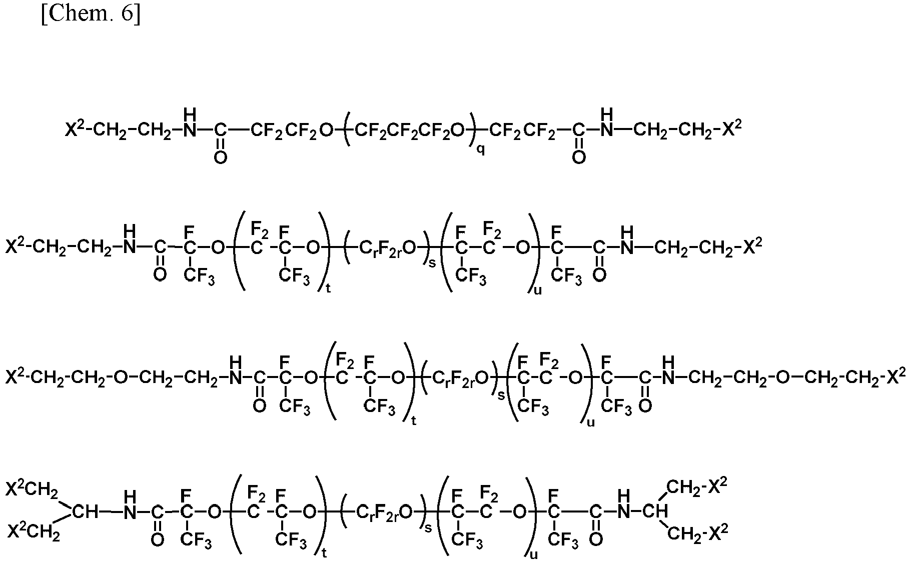 wherein X² is as defined above, q is an integer of 4 to 200, r is an integer of 1 to 6, CᵣF₂ᵣO may be straight or branched, s is an integer of 0 to 6, t and u each are an integer of 1 to 200, t+u is an integer of 2 to 200, and s+t+u is an integer of 4 to 200.

9. The fluoropolyether-containing acrylic compound of any one of claims 1 to 8, having a refractive index of up to 1.390 at temperature 25°C and wavelength 589 nm.
